# EUROPEAN PATENT APPLICATION

(11) **EP 4 707 173 A1**
(43) Date of publication of application: **11.03.2026**
(21) Application number: 25198727.7
(22) Date of filing: 28.08.2025
(51) Int. Cl.: B64D 11/02, B64D 11/04, E03B 1/04, E03B 7/04, E03B 7/07, E03B 7/08, F04B 43/14, F04B 49/03, F16K 11/044, F16K 31/06, B64D 11/00

(54) **WATER CONVEYING SYSTEM, WATER SUPPLY AND DRAINAGE SYSTEM AND AN AIRCRAFT HAVING A WATER SUPPLY AND DRAINAGE SYSTEM**

(30) Priority: 04.09.2024 DE 102024125229
(71) Applicant: AIRBUS Operations GmbH, 21129 Hamburg (DE)
(72) Inventor: Schreiner, Axel, 21129 Hamburg (DE); Lübbert, Tim, 21129 Hamburg (DE)
(74) Representative: Airbus Germany

(57) **Abstract**

The present disclosure relates to a water conveying system (100) comprising a conveying device (110) and two valves (121, 122), which can be changed in state to convey water in one of two opposite directions at a time. Furthermore, the present disclosure relates to a water supply and drainage system comprising such water conveying system and an aircraft comprising such water supply and drainage system.

## Description

The present disclosure generally relates to a water conveying system as well as a water supply and drainage system and an aircraft having such water supply and drainage system. Particularly, the present disclosure relates to a water conveying system comprising a conveying device and two valves, which are controllable to achieve an open position or a closed position to allow conveying water in only one of two opposite directions. Furthermore, the present disclosure relates to a water supply and drainage system and an aircraft comprising such water conveying system.

In a conventional aircraft, water is stored in a centralised water tank and is distributed via a pipe network towards consumer equipment. The pipes of the network are usually made from stainless steel or titanium or can include flexible hoses. In order to drain such pipes/hoses, they are regularly installed in a manner that they can be drained by gravity.

However, such installation may not allow an optimised use of available space in the aircraft. In case of flexible hoses, which regularly come with a smaller diameter, draining by gravity becomes even more difficult.

It is therefore an object of the present disclosure to provide a water conveying system with improved drainage capabilities.

This object is solved by the present invention as defined in the independent claims. Preferred embodiments are defined by the dependent claims.

According to a first aspect to better understand the present disclosure, a water conveying system for an aircraft comprises a conveying device having a pump chamber, an oscillating member, a first port and a second port, wherein the conveying device is configured to move the oscillating member to alternately increase and decrease the volume of the pump chamber. A fluid can enter the pump chamber through the first port as well as the second port, and can likewise leave through the first port as well as the second port.

Although the present disclosure mainly refers to water, it is to be understood that the conveying system disclosed herein is likewise applicable for any fluid, such as a gas or liquid. A preferred variant is used to convey potable water.

The water conveying system further comprises a first valve fluidly coupled to the first port, a second valve fluidly coupled to the second port, and a controller configured to change a state of the first and second valves. Specifically, the controller is configured to, when the conveying device moves the oscillating member to decrease the volume of the pump chamber, change a state of one of the first valve and the second valve to achieve an open position, and change a state of the other one of the first and second valves to achieve a closed position.

In other words, the controller is configured to control the state of the first and second valves in such a manner that one of the first and second valves can achieve an open position and the other one of the first and second valves can achieve a closed position. Thus, there is only one fluid communication from the pump chamber through the first port or the second port, and when the oscillating member decreases the volume of the pump chamber, the fluid in the pump chamber is pressed through the first valve or the second valve, i.e. the first port or the second port. The fluid in the pump chamber, hence, is conveyed in the direction of the first port or the second port based on the state of the first and second valves set or controlled by the controller.

Since state of the first and second valves can be controlled by the controller, the conveying system is able to fill the pump chamber of the conveying device through one of the first and second ports/valves and to discharge the fluid from the pump chamber through the other one of the first and second ports/valves. For instance, the controller can further be configured to change a state of one of the first and second valves to achieve a closed position, so that when the pump chamber is filled, i.e. when the oscillating member increases the volume of the pump chamber, a particular one of the first and second valves achieves the open position to allow filling of the pump chamber through this open valve, and when the oscillating member decreases the volume of the pump chamber, the first and second valves are in opposite states (open or closed configuration).

Thus, the water conveying system allows conveying water (or another fluid) in either direction, simply by controlling state of the first and second valves. This particularly allows supplying water through a corresponding pipe (in a first conveying direction), and on the other hand draining water from this pipe (in a second conveying direction opposite to the first conveying direction). Thus, the conveying and draining of water from the same pipe can be achieved by the system of the present disclosure with a simple structure comprising only a conveying device and two controllable or changeable valves.

It is to be understood that the conveying device without the valves is actually capable of not conveying the fluid, but merely displaces the fluid. Thus, the present disclosure the term "conveying device" is interchangeable with "displacement device" or "fluid moving device".

As a mere example, a conventional drainage of a pipe (besides drainage by gravity) can usually only be achieved by a special pump design, that allows bidirectional pumping, or by providing air suction or pressurisation in a direction opposite to the water supply direction. For instance, drainage by suction requires a special pump design that enables (self priming) bidirectional pumping and bidirectional pump-modes, that is only achievable by a rotational positive displacement pump, such as a gear pump.

However, such gear pumps are susceptible for particle contamination, so that a water filtration may be required for acceptable endurance of such pump. Such water filtration elements would cause additional weight, system complexity and additional maintenance activities.. Furthermore, all pump types that are only capable of unidirectional fluid transport, like e.g. conventional oscillating displacement pumps (e.g. conventional membrane or piston pumps) or centrifugal pumps, require additional installation of several multi-port valves to achieve bi-directional fluid transport within a piping system, which additionally renders the entire system more complex and increases its weight. Thus, conventional pumping leads to additional weight of the overall system and more complexity, which is to be avoided, particularly in the application of aircraft water supply.

In the present disclosure, on the other hand, a hydraulic orientation of the conveying device does not need to be changed. This renders the disclosed conveying system less complex.

Furthermore, by providing a conveying device with an oscillating member and a pump chamber, no rotational displacement pump (e.g., a gear pump) for bidirectional fluid transport is required. Thus, the water conveying system of the present disclosure allows supply and drainage of water (i.e., bidirectional conveying of water) without additional filtration, as such oscillating (positive displacement) pump is more robust with respect to particle impact. It is to be noted that solid particles can typically not be prevented in an aircraft water system. For instance, such particles can the present due to reduced filling water quality or can result from limescale (calcification).

Therefore, the water conveying system of the present disclosure has less components, is of lower complexity and is more robust compared to conventional systems, which saves cost and weight.

The controller can be an electric and/or electronic component configured to output an electric and/or data signal to control at least the first and second valves. As a mere example, the controller can be implemented as a processor, in form of hardware, software or a combination thereof. A simple hardware processor is likewise able to provide the controlling functionality of the controller.

In an implementation variant, each of the first and second valves can comprise a first valve seat, a second valve seat arranged opposite to the first valve seat, and a valve member movable between the first and second valve seats and configured to alternately achieve a closed position with the first valve seat and the second valve seat.

Thus, the disclosed valves allow a general open position and two closed positions, one for each fluid streaming direction. This allows providing a very simple conveying system that comes with reduced costs and weight.

In an implementation variant, the controller can be configured to control the state of each of the respective first and second valves by allowing the valve member to move either in the closed position with respect to the first valve seat or in the closed position with respect to the second valve seat or in an open position therebetween. In other words, the controller can set the conveying direction/orientation of the conveying device. Thus, the conveying system can be easily controlled to either supply water in a first direction or drain water in a second direction opposite to the first direction. It is to be understood that "to control the state of the respective valve" means that the controller can change or influence the state of the valve(s). In other words, controlling is not restricted to an active actuation of the valve(s).

In an implementation variant, each of the first and second valves can further comprise an electromagnet, and at least one permanent magnet arranged in a region of the magnetic field of the electromagnet and coupled to the valve member. This allows controlling or setting a position of the valve member by use of the electromagnetic field of the electromagnet. As a mere example, the electromagnet can be arranged at an outer side of the valve, and can be configured to move the valve member (coupled to the at least one permanent magnet) in one direction, in order to close the valve at the valve seat positioned in this particular direction. Closing the valve in the other direction (i.e. moving the valve member towards the opposite valve seat) may be achieved by other means (such as a biasing element, another (electro-) magnet, or the like).

In a further example, the controller can be configured to activate the electromagnet to move the valve member coupled to the at least one permanent magnet towards the first valve seat and/or towards the second valve seat. Thus, the controller can change a state of the valve. For instance, the controller can be considered as having full control over the valve and can move the valve member into a closed position with respect to the first valve seat, the second valve seat or both valve seats alternately. It is to be understood, that moving the valve member into a closed position includes moving the valve member into an open position with respect to the other (non-closed) valve seat.

In an implementation variant, the controller can be configured to change an orientation of the magnetic field of the electromagnet. Thus, the same electromagnet can be used to move the valve member in two directions. Specifically, the at least one permanent magnet will move corresponding to the orientation of the magnetic field of the electromagnet, and, hence, the valve member coupled to the permanent magnet is controllable in either direction, i.e., the state of the valve can be changed.

Alternatively or additionally, the controller can further be configured to change the position of the electromagnet relative to the valve, particularly relative to the valve member. Such change of position of the electromagnet of the changes the electromagnetic field, which can be employed to change the state of the valve, i.e., change the position and/or behaviour of the valve member influenced by the electromagnetic field.

In an implementation variant, the controller can be further configured to activate the electromagnet to generate a predefined electromagnetic force onto the valve member. The electromagnetic force generated by the electromagnet can be controlled. This allows forming a check valve with a predefined cracking pressure, which is the pressure difference between the first and second port, at which the valve member moves away from the closed valve seat and, hence, opens the valve seat.

As a mere example, the predefined electromagnetic force can be smaller than a force acting on the valve member by a fluid pressure. e.g., a pressure of a fluid flowing into or out of the pump chamber. This fluid pressure is built up by the oscillating member acting on the volume of the pump chamber. Thus, the predefined magnetic force can be controlled with respect to the pressure achieved by the conveying device.

According to a further example, the electromagnetic force can be controlled (e.g., by the controller) in such a manner that each of the first and second valve can function as a check valve in each direction. Particularly, the state of each of the first and second valve can be changed in such a manner, that one achieves the open position to release water from the pump chamber and the other one achieves the closed position to block a flow of fluid (water) from the pump chamber through this valve, and vice versa. Therefore, the number of valves, particularly multi-port valves can be significantly reduced. By switching between the two directions, the same conveying device and the same valves can be employed to either supply water into a pipe (fluidly connected to one of the valves) or drain the pipe.

In an implementation variant, each of the first and second valve can further comprise a biasing element acting on the valve member in the direction of the first valve seat or the second valve seat. Thus, the valve member can have a pre-set closed position with respect to the first or second valve seat depending on the biasing force direction of the biasing element. Such pre-set closed position may correspond to a closed position that will be required for the majority of conveying situations. As a mere example, draining the pipes is rather seldom compared to supplying water into the pipe, the pre-set closed position may be employed in such a manner that supplying water into the pipe is easier controllable.

The electromagnet can be configured to generate an electromagnetic force acting onto the valve member either in the same direction as the biasing force or in the opposite direction. As a mere example, acting in the same direction as the biasing element allows increasing the closing resistance of the valve member with respect to the first or second valve seat against a fluid pressure acting on the valve member at this valve seat. Thus, the valve forms a check valve that only opens if a predefined fluid pressure exceeds the force(s) acting on the valve member. Therefore, the present disclosure allows providing a controllable check valve.

Furthermore, the electromagnet can be configured to generate an electromagnetic force acting onto the valve member in the opposite direction as the biasing force. Thus, the biasing element can be used to close the valve with respect to, for example, the first valve seat, while the electromagnet can be used to open the valve with respect the first valve seat (or to facilitate opening by fluid pressure acting in the same direction as the electromagnetic force). Therefore, the valve can function as a check valve, but can still be controlled by the electromagnetic force.

In an implementation variant, each of the first and second valves can comprise an actuator configured to bring the respective valve into the open position or the closed position. As a mere example, the actuator can be of an electric, hydraulic or pneumatic type, such as an electric, hydraulic or pneumatic drive. The controller can then be configured to control the actuator. Thus, the first and second valves can be actively controlled, i.e. their respective open and closed positions can be actively changed by the controller and actuator. When the oscillating member moves in order to increase the volume of the pump chamber, one valve (of the first and second valves) is in the open position and the other valve is in the closed position under control of the controller and actuator. When the oscillating member moves in order to decrease the volume of the pump chamber, the state of the valve is opposite. This allows conveying water from the port associated with the valve open during increase of the pump chamber volume towards the port associated with the valve open during decrease of the pump chamber volume.

In an implementation variant, the oscillating member can comprise an elastic member, such as a membrane, bladder, balloon or the like, and/or the oscillating member can comprise a rigid member that is movable, such as piston. In other words, the conveying device can be a membrane pump, i.e., an oscillating positive displacement pump. It is to be understood that the membrane can be configured to achieve the oscillating movement with hydraulic or pneumatic means, a motor or the piston.

According to a second aspect to better understand the present disclosure, a water supply and drainage system for an aircraft comprises a supply tank configured to store water, a water consumer, a water supply pipe fluidly connecting the supply tank with the water consumer, and a water conveying system of the first aspect or one or more of its variants.

The controller of the water conveying system is configured to control the first and second valve and the oscillating member to convey water in the water supply pipe from the supply tank to the water consumer or from the water consumer to the supply tank. In other words, the controller of the water conveying system is configured to supply water to the water consumer or to drain the water supply pipe (particularly, the section of the water supply pipe between the water consumer and the conveying device).

It is to be understood that the water conveying system is installed in the water supply pipe. In other words, a first section of the water supply pipe connects the supply tank with the first port/valve and the second section of the water supply pipe connects the second port/valve and the water consumer.

It is further to be understood that the water supply and drainage system can comprise more than one water supply pipe, and/or more than one water consumer in any arbitrary combination, including multiple water consumers at (the end of) a water supply pipe.

According to a third aspect to better understand the present disclosure, an aircraft comprises at least one water supply and drainage system of the second aspect or one or more of its variants.

The present disclosure is not restricted to the aspects and variants in the described form and order. Specifically, the description of aspects and variants is not to be understood as a specific limiting grouping of features. It is to be understood that the present disclosure also covers combinations of the aspects and variants. Thus, each variant or optional feature can be combined with any other aspect, variant, optional feature or even combinations thereof.

In the following, the present disclosure will further be described with reference to exemplary implementations illustrated in the figures, in which:
- Figure 1: schematically illustrates a water supply and drainage system;
- Figure 2: schematically illustrates details of a water conveying system;
- Figure 3: schematically illustrates further details of a water conveying system;
- Figure 4: schematically illustrates three variants of a valve; and
- Figure 5: schematically illustrates an aircraft comprising a water supply and drainage system.

In the following description, for purposes of explanation and not limitation, specific details are set forth in order to provide a thorough understanding of the present disclosure. It will be apparent to one skilled in the art that the present disclosure may be practiced in other implementations that depart from these specific details.

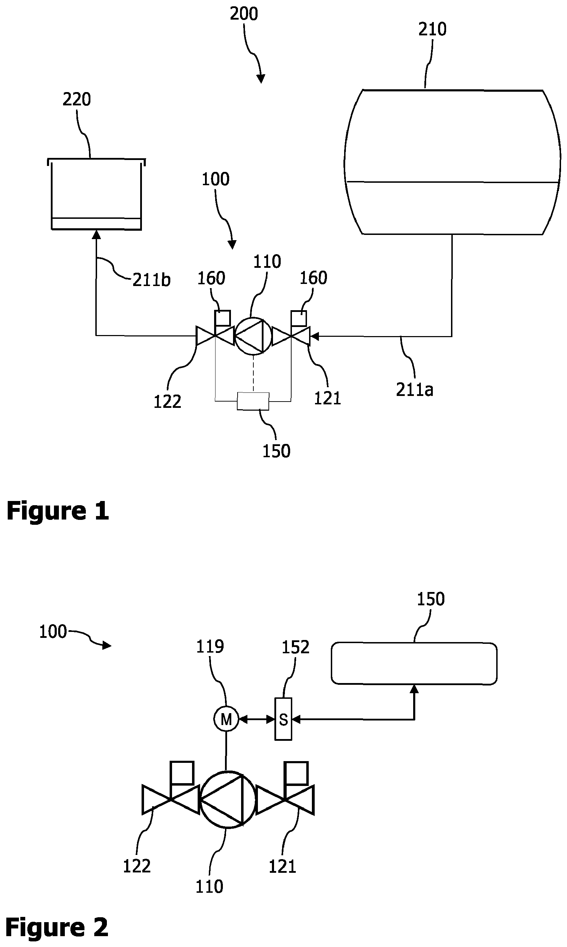

Figure 1 schematically illustrates a water supply and drainage system 200 that includes a supply tank 210 configured to store water. For instance, the supply tank 210 can store potable water to be used in at least one water consumer 220, such as a faucet, a water dispenser, coffeemaker, a hot water facility, a toilet, or the like.

Figure 1 exemplarily illustrates a buffer tank 220 as a "water consumer", which may be a pressureless tank configured to store a predetermined amount of water for one or more (actual) water consumers (not explicitly illustrated) downstream of the buffer tank 220.

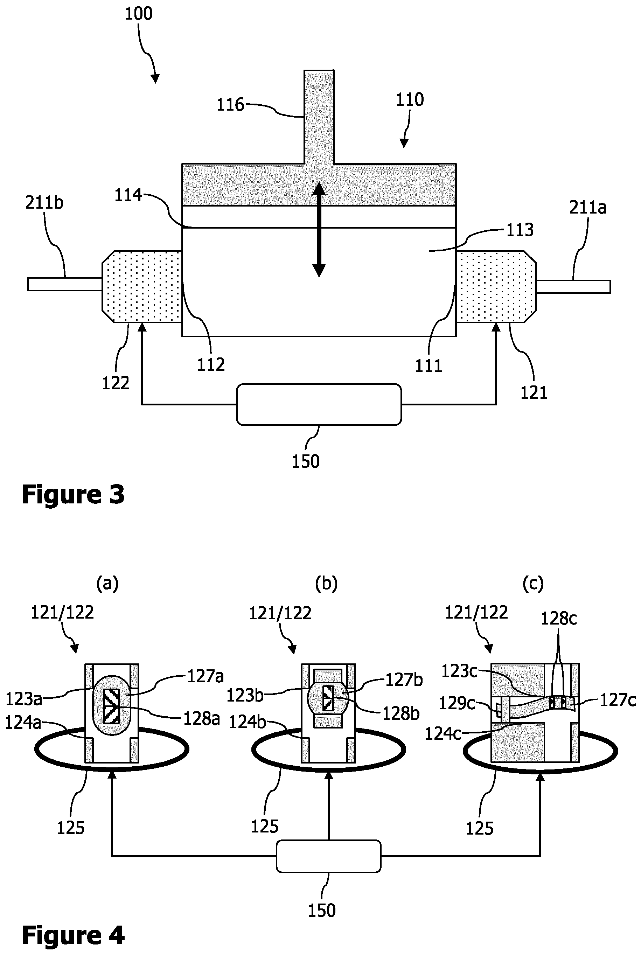

The water supply and drainage system 200 comprises a water conveying system 100 that comprises a conveying device 110 fluidly coupled to the supply tank 210 via a first section 211a of a water supply pipe and configured to convey water from the supply tank 210 to the water consumer 220 via a second section 211b of the water supply pipe. The water conveying system 100 further comprises a first valve 121 and a second valve 122 at opposite ports 111, 112 (Figure 3) of the conveying device 110. The water conveying system 100 further comprises a controller 150 configured to change a state of at least the first and second valves 121, 122. Particularly, the controller 150 can change the state of one of the first and second valves 121, 122 to achieve an open position and change the state of the other one of the first and second valves 121, 122 to achieve a closed position.

Figure 1 illustrates the first and second valves 121, 122 as comprising a respective actuator 160. Such actuator 160 can be configured to actively open and close the respective valve 121, 122. In addition, each actuator 160 can be controlled by the controller 150. Thus, the controller 150 can, for example, change the state of the first valve 121 to achieve an open position and to change a state of the second valve 122 to achieve a closed position via the respective actuators 160, so that water can stream into/towards the conveying device from the supply tank 210. Thereafter, the controller can change the state of the first valve 121 to achieve the closed position and to change the state of the second valve 122 to achieve the ( via the respective actuators 160, so that the water can further stream towards the water consumer 220. Therefore, the change of the state of the respective valve 121, 122 means an operation of the respective actuator 160 to open or close the associated valve 121, 122. As a mere example, each of the actuators 160 can be implemented by an electromagnetic element, a piezoelectric element, hydraulic element, pneumatic element, or the like to control the state of the valves 121, 122.

With additional reference to Figure 2, the conveying device 110 can be equipped with an actuator 119. Such actuator 119 can be an electric motor, a hydraulically or pneumatically driven motor or piston or bladder, a piezoelectric element, an electromagnetic element, or the like that can achieve an oscillating movement, such as an up or down movement (wherein either both oscillating movements can be achieved by the actuator 119, or only one of the lady movement can be achieved by the actuator 119, while a movement in the opposite direction is achieved by another component (not illustrated), such as a biasing element or the like). The controller 150 can be coupled/connected with the actuator 119. For instance, the controller 150 can be configured to control operation of the actuator 119 and, hence, operation (oscillation) of the conveying device 110.

Optionally, the water conveying system 100 can comprise a sensor 152 configured to sense a position or status of the actuator 119 and/or a status of the conveying device 110. The sensor 152 can further be configured to provide a sensor signal to the controller 150. This allows the controller 150 to control change of the state of the first and second valves 121, 122 based on the position or status of the actuator 119, i.e. the status of the conveying device 110.

It is to be noted that Figure 2 does not illustrate the connection or coupling between the controller 150 and the first and second valves 121, 122 to keep Figure 2 legible.

Figure 3 schematically illustrates further details of a possible water conveying system 100. For instance, the conveying device 110 has a pump chamber 113, an oscillating member 114, 116, a first port 111 and a second port 112. The oscillating member 114, 116 can comprise a membrane 114 and/or a piston 116. Nevertheless, the oscillating member 114, 116 alternately increases and decreases the volume of the pump chamber 113 by an oscillating movement (schematically illustrated by the double arrow), for example, by an up and down movement. It is to be understood that a membrane 114 and a piston 116 are only some examples of members achieving a pumping effect by increasing and decreasing the volume of the pump chamber 113.

As a mere example, the piston 116 can drive the membrane 114. Alternatively, the membrane 114 can be driven by any other means. This may even include that the space of the conveying device above the membrane 114 is alternately inflated and deflated to move the membrane 114 with respect to the pump chamber 113.

Each time the volume of the pump chamber 113 is increased, a low-pressure is achieved and a sucking force acts onto the ports 111, 112 and, hence, the first and second valves 121, 122, which are fluidly coupled to the respective first port 111 and second port 112. Each time the volume of the pump chamber 113 is decreased, a high-pressure is achieved and the fluid in the pump chamber 113 is pressed against the ports 111, 112 and, hence, the first and second valves 121, 122.

In order to achieve a water supply from the tank 210 to the water consumer 220, the controller 150 is configured to change the state of the first valve 121 to achieve the open position when the volume of the pump chamber 113 is increased, and to change the state of the first valve 121 to achieve the closed position when the volume of the pump chamber 113 is decreased. It is to be understood that the respectively other valve 121, 122 achieve its closed position. The controller 150 can control the state of the valves 121, 122, for example, based on the status of the conveying device 110, i.e. the status of the oscillating member 114, 116. As a mere example, the controller 150 may also control the oscillating movement of the of oscillating member 114, 116, or may receive a signal from the sensor 152, in order to control the state of the valves 121, 122. Thus, water is sucked from pipe section 211a into the pump chamber 113 and pressed into the pipe section 211b due to the oscillating movement of the oscillating member 114, 116.

On the other hand, if the water supply pipe 211, particularly the pipe section 211b fluidly connected to the water consumer 220 is to be drained, the same oscillating movement of the oscillating member 114, 116 is performed. However, the controller 150 is configured to change the "open and closed state" of the first and second valves 121, 122 in the opposite manner as described above. Thus, when the volume of the pump chamber 113 is increased, the second valve 122 achieves an open position and the first valve 121 achieves a closed position, and when the volume of the pump chamber 113 is decreased, the second valve 122 achieves a closed position and the first valve 121 achieves an open position.

Therefore, a simple conveying system 100 can be provided that requires only a conveying device 110 and two controllable valves 121, 122. By providing an oscillating conveying device 110, no rotational conveying members are present in the wet part of the conveying device 110 and the conveying device 110 is more robust, particularly with respect to particles in the water.

Figure 4 schematically illustrates three exemplary variants of a further valve design that can be employed for any of the first and second valves 121, 122. These exemplary variants allow omitting an actuator 160 for each of the valves 121, 122, but allows changing a state of the respective valve 121, 122 by other means and a fluid pressure acting onto a valve member. Specifically, each of the variants is based on electromagnetic forces achieved by an electromagnet 125 and at least one permanent magnet 128.

As a mere example, the valve 121, 122 can be fluidly connected to the first or second port 111, 112 of the conveying device 110, for example at a bottom side in Figure 4, and can further be fluidly connected to the water supply pipe 211 (either section 211a or 211b) at the other side, for example the top side in Figure 4, or vice versa.

Referring to Figure 4(a), the valve 121, 122 comprises a first valve seat 123a and a second valve seat 124a arranged opposite to the first valve seat 123a. A fluid, such as water, can flow through the valve 121, 122 from the first valve seat 123a to the second valve seat 124a and vice versa. The valve 121, 122 further comprises a valve member 127a movable between the first and second valve seats 123a, 124a and is configured to alternately achieve a closed position at the first valve seat 123a or at the second valve seat 124a. Thus, the valve 121, 122 can be in a closed position when the valve member 127a closes the valve either at the first valve seat 123a or the second valve seat 124a. It is to be understood that the valve member 127a can achieve a position between the first valve seat 123a and the second valve seat 124a, so that fluid can stream around the valve member and, hence, through the valve 121, 122, which is herein referred to as an open position of the valve 121, 122.

The exemplary valve 121, 122 comprises an electromagnet 125 and at least one permanent magnet 128a arranged in a region of the magnetic field of the electromagnet 125 and coupled to the valve member 127a. As a mere example, the at least one permanent magnet 128a can be inside of the valve member 127a, where it/they are protected. Alternatively, the at least one permanent magnet 128 can at least partially be arranged on an outer side of the valve member 127a, such as a lateral side and/or a front side and/or a back side (front and back sides facing the first and second valve seats 123, 124, respectively).

When the controller 150 activates the electromagnet 125 (e.g., energises the electromagnet 125 with a current, such as a direct current), the electromagnetic field acts onto the permanent magnet(s) 128a. Thus, the valve member 127a and the electromagnet 125 form an electromagnetic actuator for the valve 121, 122. The controller 150, hence, can change a state of the valves 121, 122 by activating the electromagnet 125.

Assuming that a stream of water shall be generated and controlled to flow from top to bottom in Figure 4, the controller 150 can energise the electromagnet 125, so that the valve member 127a achieves a closed position at the first valve seat 123a. The electromagnetic force generated by the electromagnet 125, i.e. the closing force of the valve member 127a at the first valve seat 123a is rather low, for example, slightly above a net weight of the valve member 127a. If a fluid pressure acting on the valve member 127a at the first valve seat 123a, i.e. in a direction from the top to the bottom in Figure 4, rises above the "closing force" of the valve member 127a pressing against the first valve seat 123a, the valve member 127a will detach from the first valve seat 123a and the valve 121, 122 will achieve the open position.

It is to be noted that the electromagnetic force, i.e. the electromagnetic actuator, has to be designed in such a manner that the valve member 127a will not reach or block the second valve seat 124a (the opposite valve seat). This may particularly be achieved by adapting/setting the electromagnetic force depending on the fluid pressure, and/or by adapting the hydraulic flow-resistance of the movable when in the open position and the fluid flowing around the valve member 127a.

In any case, the valve 121, 122 acts like a check valve by closing the valve 121, 122 in the direction of the first valve seat 123a (particularly, when a water pressure acts towards the first valve seat 123a), but allowing to achieve an open position of the valve 121, 122 in a flow (and pressure) direction towards the second valve seat 124a.

In order to control the state of the valves 121, 122 to function in the opposite manner, i.e. to act as a check valve in the direction of the second valve seat 124a, the controller 150 may simply reverse the electromagnetic force, to move and press the valve element 127a towards/onto the second valve seat 124a as described above. As a mere example, the controller 150 may switch the polarity of a DC current applied to the electromagnet 125 compared to a polarity used to achieve a check valve in the opposite direction explained first.

Alternatively, the electromagnet 125 may be movable relative to the valve 121, 122 or at least relative to the valve member 127. This movement of the electromagnet 125 may likewise be under control of the controller 150.

Such electromagnetic influenced or set valve 121, 122 allows even omitting any mechanical elements, such as a spring or the like in the interior of the valve 121, 122.

Referring to the example of Figure 4(b), a similar valve 121, 122 as in Figure 4(a) is illustrated. Thus, only the differences between both examples will be explained, while the other features are the same and their description is omitted for sake of brevity.

Specifically, in Figure 4(a) the valve member 127a can be considered as a ball-like or egg-shaped valve member, while in Figure 4(b) the valve member 127b is a plunger. The plunger includes at least one cylindrically shaped portion. Such cylindrically shaped portion facilitates arrangement of the permanent magnet 128b. As a mere example, the permanent magnet 128b could form or be the cylindrical portion of the plunger. Furthermore, the cylindrically shaped portion also facilitates fluid-tightness, as it may achieve a tighter fit with valve seats 123b, 124b.

A further exemplary valve 121, 122 is illustrated in Figure 4(c). Instead of a plunger or ball-like valve member 127a,b, the example of Figure 4(c) comprises an elastic valve member 127c that is configured to cover either the first valve seat 123c or the second valve seat 124c.

As a mere example, the elastic valve member 127c can be made from an elastomer or another plastic material having elastic capabilities. One or more permanent magnets 128c (two are illustrated) can be provided inside of the elastomer. Alternatively or additionally, a magnetic elastomer can be used to make the valve member 127c, where a magnetic characteristic is integrated into the elastomer and has a particular magnetic polarity like a permanent magnet.

The elastic valve member 127c can be fixed at one side, for example by a clamp 129c or other holder. This allows the elastic valve member 127c to flip between a closing position against the first valve seat 123c, a closing position against the second valve seat 124c, and an open position therebetween.

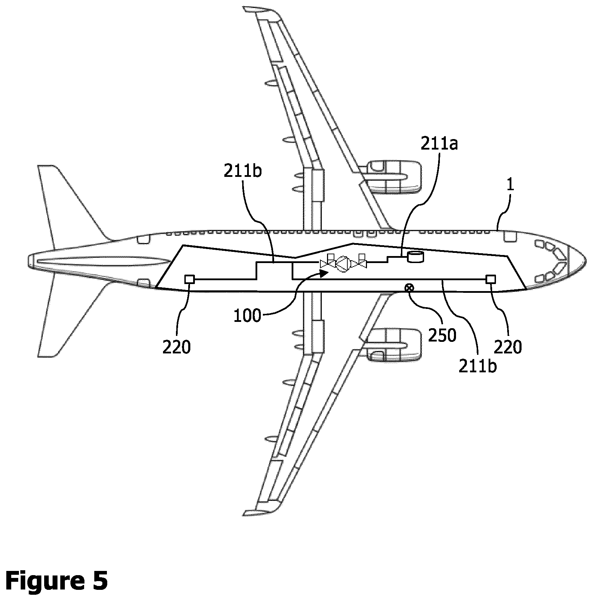

Figure 5 schematically illustrates an aircraft 1 comprising at least one water supply and drainage system 200 including a water conveying system 100, such as the system 100/200 illustrated and explained with respect to Figures 1 to 4. The aircraft 1 can be equipped with a discharge port 250, that can be arranged at or near an outer skin of the aircraft 1. Thus, water from the water supply and drainage system 200 can be discharged through the discharge port 250, for example, when the water conveying device 100 operates in a draining mode, i.e. when it conveys water away from the water consumers 220.

It is to be understood that any number of water consumers 220 and any number of regions in the aircraft 1 having one or more water consumers 220 can be installed in the aircraft 1. Thus, the present disclosure is not restricted to the illustrated two water consumers 220. Likewise, the aircraft 1 may include one or more water supply and drainage systems 200 or portions of a water supply and drainage systems 200.

It is believed that the advantages of the technique presented herein will be fully understood from the foregoing description, and it will be apparent that various changes may be made in the form, constructions and arrangement of the exemplary aspects thereof without departing from the scope of the disclosure or without sacrificing all of its advantageous effects. Because the technique presented herein can be varied in many ways, it will be recognized that the disclosure should be limited only by the scope of the claims that follow.

## Claims

1. A water conveying system (100) for an aircraft, comprising:
a conveying device (110) having a pump chamber (113), an oscillating member (114, 116), a first port (111) and a second port (112), and configured to move the oscillating member (114, 116) to alternately increase and decrease the volume of the pump chamber (113);
a first valve (121) fluidly coupled to the first port (111); and
a second valve (122) fluidly coupled to the second port (112);
**characterised by**:
a controller (150) configured to:
when the conveying device (110) moves the oscillating member (114, 116) to decrease the volume of the pump chamber (113), change a state of one of the first valve (121) and the second valve (122) to achieve an open position and change a state of the other one of the first and second valve (121, 122) to achieve a closed position.

2. The water conveying system (100) of claim 1, wherein each of the first and second valves (121, 122) comprises:
a first valve seat (123);
a second valve seat (124) arranged opposite to the first valve seat; and
a valve member (127) movable between the first and second valve seats (123, 124) and configured to alternately achieve a closed position with the first valve seat (123) and the second valve seat (124).

3. The water conveying system (100) of claim 2, wherein the controller (150) is configured to control the state of each of the respective first and second valves (121, 122) by moving the valve member (127) either in the closed position with respect to the first valve seat (123) or in the closed position with respect to the second valve seat (124).

4. The water conveying system (100) of claim 2 or 3, wherein each of the first and second valves (121, 122) further comprises:
an electromagnet (125); and
at least one permanent magnet (128) arranged in a region of the magnetic field of the electromagnet (125) and coupled to the valve member (127),
wherein the controller (150) is configured to activate the electromagnet (125) to move the valve member (127) coupled to the at least one permanent magnet (128) towards the first valve seat (123) and/or towards the second valve seat (124).

5. The water conveying system (100) of claim 4, wherein the controller (150) is configured to change an orientation of the magnetic field of the electromagnet (125).

6. The water conveying system (100) of claim 4 or 5, wherein the controller (150) is further configured to activate the electromagnet (125) to generate a predefined magnetic force onto the valve member (127),
wherein, preferably, the predefined magnetic force is smaller than a force acting on the valve member (127) by a fluid pressure.

7. The water conveying system (100) of claim 1, wherein each of the first and second valves (121, 122) comprises an actuator (160) configured to bring the respective valve (121, 122) into the open position or the closed position,
wherein the controller (150) is configured to control the actuator (160).

8. The water conveying system (100) of one of claims 1 to 7, wherein the oscillating member comprises an elastic member, preferably a membrane (114), and/or a rigid member, preferably a piston (116).

9. A water supply and drainage system (200) for an aircraft, comprising:
a supply tank (210) configured to store water;
a water consumer (220);
a water supply pipe (211) fluidly connecting the supply tank (210) with the water consumer (220); and
a water conveying system (100) of one of claims 1 to 8 arranged in the water supply pipe (211), wherein the controller (150) of the water conveying system (100) is configured to control the first and second valve (121, 122) and the oscillating member (114, 116) to convey water in the water supply pipe (211) from the supply tank (210) to the water consumer (220) or from the water consumer (220) to the supply tank (210).

10. An aircraft comprising at least one a water supply and drainage system (200) of claim 9.
